# EUROPEAN PATENT SPECIFICATION

(11) **EP 4 230 457 B1**
(45) Date of publication and mention of the grant of the patent: **02.10.2024**
(21) Application number: 23153186.4
(22) Date of filing: 25.01.2023
(51) Int. Cl.: B60K 6/48, B60W 10/06, B60W 30/186, B60W 50/02, B60W 50/038, B60W 50/029

(54) **CONTROL DEVICE OF VEHICLE**
STEUERUNGSVORRICHTUNG FÜR EIN FAHRZEUG
DISPOSITIF DE COMMANDE DE VÉHICULE

(30) Priority: 10.02.2022 JP 2022019610
(43) Date of publication of application: 23.08.2023
(73) Proprietor: Suzuki Motor Corporation, Hamamatsu-shi, Shizuoka 432-8611 (JP)
(72) Inventor: UEDA, Yuki, Hamamatsu-shi, 432-8611 (JP); TAKAHASHI, Yusuke, Hamamatsu-shi, 432-8611 (JP)
(74) Representative: Plasseraud IP

(56) References cited:
- EP-A1- 1 447 583
- DE-A1- 102010 052 382
- US-A- 6 113 517

## Description

### [Technical Field]

The present invention relates to a control device of a vehicle.

### [Background Art]

Patent Literature 1 discloses a control device of a vehicle in which a clutch for an engine connection/disconnection is biased, when a control of connecting/disconnecting between an engine and a motor is not performed, to be in an engagement state so as to transmit a predetermined transmission torque smaller than a maximum transmission torque, an engine torque command value being determined based on a user's required engine torque so as to regulate rotational difference of the clutch up to an allowable one when an abnormality occurs in the control by the clutch. Due thereto, in the control device of Patent Literature 1, at a failure of the clutch, an evacuation travel using the determined engine torque command value is enabled with a seizure of the clutch prevented.

### [Citation List]

### [Patent Literature]

[Patent Literature 1] JP 2015-54633 A

### [Summary of Invention]

### [Technical Problem]

Although in the control device of Patent Literature 1 the clutch is biased, by a disc spring, toward an engagement side so as to be in a predetermined torque transmission state when the clutch is in a non-operation state or in a failure state, there is not taken into consideration a clutch system in which an engagement state is maintained, upon an occurrence of a failure of the clutch, to be the state thereat. Specifically, in a case of a normally-open type clutch system in which a clutch is completely released at a failure thereof or a normally-close type clutch system in which a clutch is completely engaged (connected) at a failure thereof, a clutch state (e.g., released state or engaged state) at treating the failure is uniquely identified. On the other hand, in a case of a normally-stopped type clutch system in which the clutch state at a failure thereof is maintained even thereafter, the clutch state at treating the failure is variously expected. Patent Literature 1 does not consider a vehicle with such a normally-stopped type clutch system. For this reason, if such a normally-stopped type clutch system is applied to the vehicle as described in Patent Literature 1, since a degree of engagement of the clutch at the failure is inconstant to thereby inconstantly cause rotational difference of the clutch to occur, there is a possibility that a prevention of the seizure of the clutch and a proper evacuation travel are not both realized.

A further control device is known from US 6 113 517 A.

The present invention has been made in view of the above-mentioned circumstances, and an object thereof is to provide a control device of a vehicle capable of, even in a case where a failure to cause a clutch to be damaged occurs, properly setting a period of time for which the vehicle is allowed to travel with a driver's intention while avoiding a damage of the clutch.

### [Solution to Problem]

According to an aspect of the present invention, there is provided a control device of a vehicle, the vehicle including: an engine; a transmission to change a rotation speed of the engine at a shift ratio corresponding to one of shift stages and output the changed rotation speed to a driving wheel; a clutch to be switched between an engaged state where power is transmitted between the engine and the transmission, and a released state where no power is transmitted therebetween; an actuator to operate the clutch; and a clutch control unit to control the actuator, the control device including a traveling state control unit to: set, when the actuator or the clutch control unit malfunctions, a continuous travel allowable period of time, for which the vehicle is allowed to continuously travel without causing a damage of the clutch, based on a damage risk of the clutch; and place the vehicle in a predetermined limited-traveling state where a load to act on the clutch is limited, after the set continuous travel allowable period elapses.

### [Advantageous Effect of Invention]

According to the present invention, it is possible to, even in a case where a failure to cause a clutch to be damaged occurs, properly set a period of time for which a vehicle is allowed to travel with a driver's intention while avoiding a damage of the clutch.

### [Brief Description of Drawings]

Fig. 1 is a diagram of a vehicle mounted with a control device according to an embodiment of the present invention.
Fig. 2 is a flow chart showing a fail-safe operation for a clutch to be performed in the control device.
Fig. 3 shows a setting trend of a continuous travel allowable period of time to be used for the fail-safe operation in the control device.

### [Description of Embodiment]

A control device according to an embodiment of the present invention is mounted on a vehicle, the vehicle including: an engine; a transmission to change a rotation speed of the engine at a shift ratio corresponding to one of shift stages and output the changed rotation speed to a driving wheel; a clutch to be switched between an engaged state where power is transmitted between the engine and the transmission, and a released state where no power is transmitted therebetween; an actuator to operate the clutch; and a clutch control unit to control the actuator, the control device including a traveling state control unit to: set, when the actuator or the clutch control unit malfunctions, a continuous travel allowable period of time, for which the vehicle is allowed to continuously travel without causing a damage of the clutch, based on a damage risk of the clutch; and place the vehicle in a predetermined limited-traveling state where a load to act on the clutch is limited, after the set continuous travel allowable period elapses.

### [Embodiment]

Hereinafter, referring to Figs., a vehicle mounted with a control device according to an embodiment of the present invention will be described.

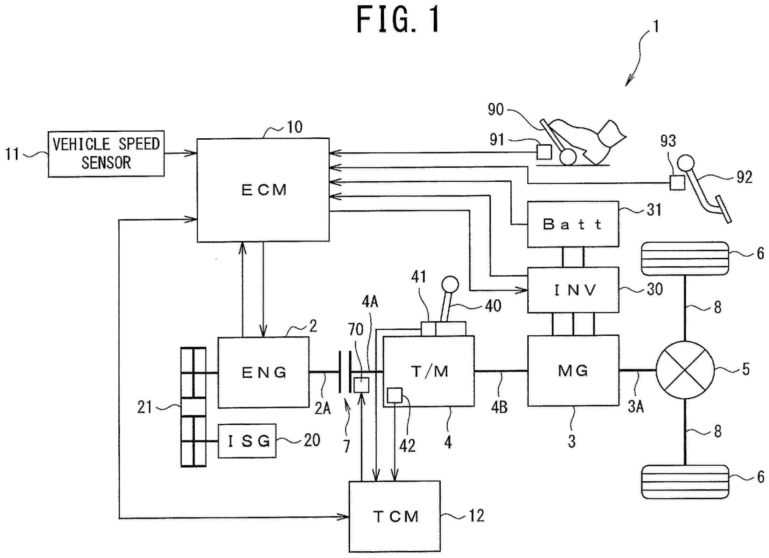

As shown in FIG. 1, the vehicle 1 includes an engine 2 (indicated with "ENG" in the figure), a motor generator 3 (indicated with "MG" in the figure), a transmission 4 (indicated with "T/M" in the figure), a differential 5, driving wheels 6, a clutch 7, and an ECM 10 (Engine Control Module) to control the engine 2, and a TCM 12 (Transmission Control Module) to control the transmission 4 and the clutch 7.

The engine 2 is formed with cylinders, being configured to perform, for each cylinder, a series of four steps of an intake step, a compression step, an expansion step and an exhaust step.

The engine 2 is connected with an ISG 20 (Integrated Starter Generator). Specifically, the ISG 20 is connected to a crankshaft 2A of the engine 2 via a power transmission member 21 such as a belt. The ISG 20 has a motor function of rotating with a supplied electric power to thereby rotate the engine 2, and a generator function of converting a rotation power inputted from the crankshaft 2Ainto an electric power.

The motor generator 3 has a motor function of generating a driving force with an electric power supplied from a battery 31 (indicated with "Batt" in the figure) through an inverter 30 (indicated with "INV" in the figure), and a generator function of generating regeneration electric power with a counter driving force inputted from the differential 5.

The motor generator 3 is provided on a power transmission path between the transmission 4 and left and right driving wheels 6, of which power is to be transmitted to the driving wheels 6. Specifically, the motor generator 3 is connected so as to transmit a driving force/be transmitted with a driving force on a power transmission path between the transmission 4 and the differential 5, i.e., a power transmission path between an output shaft 4B of the transmission 4 and a drive shaft 3A of the motor generator 3, the drive shaft 3A being configured to transmit/be transmitted a driving force to/from the differential 5.

The inverter 30 is controlled by the ECM 10 to convert DC power supplied from the battery 31 into three-phase AC power and supply the converted AC power to the motor generator 3 and to convert three-phase AC power generated by the motor generator 3 into DC power and charge the battery 31 with the converted DC power.

The battery 31 is a secondary battery such as a lithium ion battery.

The transmission 4 is configured to change, at a shift ratio corresponding to one of shift stages, a rotation speed inputted thereinto from the engine 2 and output it from the output shaft 4B. The transmission 4 includes a parallel shaft gear type transmission mechanism to be generally used for a manual transmission. The output shaft 4B of the transmission 4 is connected to the left and right driving wheels 6 via the motor generator 3, the differential 5, and left and right drive shafts 8. That is, the motor generator 3 is connected to the output shaft 4B of the transmission 4, of which the drive shaft 3A is connected to the differential 5. Thus, the motor generator 3 and the transmission 4 are each connected to the driving wheels 6 so as to independently transmit a driving force, the driving wheels 6 being configured to be transmitted with driving forces from both the engine 2 and the motor generator 3, the driving force from the engine 2 being shifted at the transmission 4.

As shift stages to be established in the transmission 4, there are first (low-speed) to fifth (high-speed) forward shift stages and a reverse shift stage. The number of forward shift stages is to be determined depending on the specification of the vehicle 1, not limited to 5 (first to fifth shift stages).

The shift stages in the transmission 4 are controlled by the TCM 12 so as to be automatically switched therebetween in accordance with an operation position (shift range) of a shift selector 40, an accelerator opening, and the like. The operation position of the shift selector 40 is detected by a shift position sensor 41. The shift position sensor 41 is connected to the TCM 12, to send the detection result thereto. The accelerator opening is detected by an accelerator pedal position sensor 91 to detect a depression amount of an accelerator pedal 90. The accelerator pedal position sensor 91 is connected to the ECM 10, to send the detection result thereto.

The transmission 4 is provided with a gear position sensor 42. The gear position sensor 42 is connected to the TCM 12. The gear position sensor 42 detects one of the shift stages which is established in the transmission 4, and outputs the detection signal to the TCM 12.

The vehicle 1 also includes a clutch 7. The clutch 7 is provided on a power transmission path between the engine 2 and the transmission 4. A single plate dry friction clutch can be used as the clutch 7, for example. The engine 2 and the transmission 4 are interconnected via the clutch 7. The clutch 7 is placed in one of an engaged state where power is allowed to be transmitted between the engine 2 and the transmission 4, a released state where no power is transmitted therebetween, and a partial clutch engagement state where a torque is allowed to be transmitted therebetween with a rotational difference.

The vehicle 1 also includes the above-mentioned accelerator pedal 90 to be operated by a driver. The depression amount of the accelerator pedal 90 is to be detected by the accelerator pedal position sensor 91. The accelerator pedal position sensor 91 is connected to the ECM 10, being configured to detect the depression amount of the accelerator pedal 90 as the accelerator opening and send a signal corresponding thereto to the ECM 10.

The vehicle 1 also includes a brake pedal 92 to be operated by a driver. A depression amount of the brake pedal 92 is to be detected by a brake pedal sensor 93. The brake pedal sensor 93 is connected to the ECM 10, being configured to send a signal corresponding to the depression amount of the brake pedal 92 to the ECM 10.

The vehicle 1 also includes an actuator 70. The actuator 70 operates the clutch 7 to switch between the clutch states. Also, the actuator 70 operates the transmission 4 to switch between the shift stages. The actuator 70 is connected to the TCM 12, to be controlled thereby. Thus, the transmission 4 and the clutch 7 constitute an AMT (Automated Manual Transmission) in which a shift operation and a clutch operation in a manual transmission are automated.

The actuator 70 is constituted of an electric actuator with motors (not shown) for respectively switching the clutch state and the shift stage, including a normally-stopped type structure as mentioned above.

The actuator 70 is configured to, at a failure of the actuator 70 or the TCM 12, maintain the clutch state thereat upon non-conduction due to the failure. Specifically, when the clutch 7 is in the engaged state, if the failure occurs to thereby cause non-conduction, the engaged state is maintained (i.e., the clutch state is maintained as the engaged state). When the clutch 7 is in the released state, if the failure occurs to thereby cause non-conduction, the released state is maintained (i.e., the clutch state is maintained as the released state). When the clutch 7 is in the partial clutch engagement state, if the failure occurs to thereby cause non-conduction, the partial clutch engagement state is maintained (i.e., the clutch state is maintained as the partial clutch engagement state).

Note that a normally-close type hydraulic actuator which is conventionally known is configured to release hydraulic pressure upon a failure by which conduction is disenabled. A clutch provided with such a hydraulic actuator is configured to be compulsorily placed in the engaged state by a restoring force of a clutch spring (e.g., diaphragm spring) when the hydraulic pressure is released, constituting normally-close type one. Also note that: as an example of the failure of the actuator 70, the actuator 70 is disenabled to be operated due to disconnection in an internal wiring of the actuator 70; and as an example of the failure of the TCM 12, the TCM is disenabled to output a control command to the actuator 70.

The ECM 10 and TCM 12 are each constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the ECM 10/TCM 12, with various constants and maps. That is, the CPU executes the program stored in the ROM using the RAM as an operation area, causing the computer unit to function as the ECM 10/TCM 12.

The ECM 10 is connected with a vehicle speed sensor 11. The vehicle speed sensor 11 is configured to detect a vehicle speed of the vehicle 1 and send the detection result to the ECM 10.

The ECM 10 is configured to switch between travel modes for the vehicle 1. As the travel modes, there are an EV mode and an HEV mode, for example.

In the EV mode, the vehicle 1 is driven, with the clutch 7 released, with power from the motor generator 3. In the HEV mode, the vehicle 1 is driven, with the clutch 7 engaged, with power from the engine 2 or from both the engine 2 and the motor generator 3.

The ECM 10 switches between the EV mode and the HEV mode based on the accelerator opening and an engine rotation speed.

For example, when a driver required torque to be determined based on the accelerator opening exceeds an HEV transition threshold during traveling in the EV mode, the ECM 10 restarts the engine 2 to thereby switch the EV mode to the HEV mode.

For example, when the driver required torque to be determined based on the accelerator opening and the engine rotation speed falls below an EV transition threshold, the ECM 10 stops the engine 2 to thereby switch the HEV mode to the EV mode.

The TCM 12 is connected with the shift position sensor 41, the gear position sensor 42, and the ECM 10. The TCM 12 drives the actuator 70 in accordance with input signals from the shift position sensor 41 and the gear position sensor 42, and the control command from the ECM 10, to thereby control the clutch 7 and the transmission 4.

As mentioned above, as the clutch state at the failure of the actuator 70/the TCM 12, there are the partial clutch engagement state where the clutch 7 is partially engaged, the engaged state where the clutch is completely engaged, and the released state where the clutch is completely released.

In the partial clutch engagement state, when a large rotational difference occurs to thereby cause an engagement surface of the clutch 7 to become high temperature due to frictional heat, there is a possibility that a seizure of the clutch 7 occurs to thereby damage the clutch 7. The "seizure of clutch" means a state where the engagement surface of the clutch 7 is fixed to, due to an abnormal high temperature, a fly wheel to contact therewith. When the seizure of the clutch 7 occurs, the fixing of the clutch 7 disenables the clutch 7 to be released. Additionally, in such a case (when the large rotational difference occurs to thereby cause the engagement surface of the clutch 7 to become high temperature due to frictional heat), characteristics of the engagement surface may be changed to thereby decrease a friction coefficient, causing a defect with which a driving force is disenabled to be properly transmitted.

On the other hand, in the engaged state, since the frictional heat due to the rotational difference of the clutch 7 is difficult to occur, there is low possibility that the seizure of the clutch 7 occurs. Also, in the released state, since frictional heat never occurs, there is no possibility that the seizure of the clutch 7 occurs.

Thus, the clutch state at the failure is not uniquely determined. In addition, a damage risk of the clutch 7 (i.e., a possibility that the clutch 7 is damaged) depends on a degree of the rotational difference (slip) of the clutch 7, and the like. The damage of the clutch 7 such as the seizure thereof is allowed to be avoided to some extent, by decreasing an engine torque to an idle torque to thereby prevent the rotational difference of the clutch 7. However, if the engine torque is decreased thereto upon an occurrence of the failure, it may be difficult to perform evasive travel until the vehicle 1 reaches a repair base or the like.

For this reason, it is preferable to properly ensure a travel allowable period of time for which the vehicle 1 is allowed to travel without causing the seizure of the clutch 7.

Thus, in the present embodiment, in a case where the actuator 70 or the TCM 12 malfunctions, the ECM 10 determines, based on a damage risk of the clutch 7, a continuous travel allowable period of time for which the vehicle 1 is allowed to continuously travel without causing a damage of the clutch 7. Subsequently, the ECM 10 places the vehicle 1 in a predetermined limited-traveling state where a load to act on the clutch 7 is limited to be small. In this case, the ECM 10 may notify the driver of the fact that a failure occurs in the actuator 70/TCM 12. Note that for the continuous travel allowable period, such a limitation to the load in the limited-traveling state is not performed, but an engine torque is controlled based on the accelerator opening and the like as normal travel.

In the predetermined limited-traveling state, a rotation speed of the engine 2 (engine rotation speed) is limited to be nearly an idling rotation speed. Specifically, therein, an engine torque is limited to an idle torque with which the engine 2 rotates at the idling rotation speed or near, the limited engine torque being applied to the clutch 7.

The continuous travel allowable period is experimentally determined in advance, being stored in the ROM of the ECM 12. Upon the occurrence of the failure of the actuator 70 or the TCM 12, the ECM 12 sets/updates the stored continuous travel allowable period based on the damage risk. The continuous travel allowable period is variable to vary with a state such as a clutch transmission torque, an engine torque, and/or a vehicle speed, the clutch transmission torque depending on a clutch state at the failure. During traveling after the failure, the ECM 10 reviews the stored/set continuous travel allowable period to thereby update it. In other words, the ECM 10 instantly uses the stored continuous travel allowable period at a vehicle travel upon the occurrence of the failure and thereafter, uses the updated continuous travel allowable period based on the damage risk, the damage risk depending on the current clutch transmission torque, the current engine torque, and/or the current vehicle speed.

Specifically, the damage risk depends on a magnitude relation between the engine torque and the clutch transmission torque and/or that between the vehicle speed and a predetermined vehicle speed.

For example, in a case where, at the failure, the engine torque is larger than the clutch transmission torque, the rotational difference in the clutch 7 becomes large to thereby increase the damage risk and thus, the continuous travel allowable period is set as a smaller value (i.e., is updated to be shorter one). In contrast, in a case where, at the failure, the engine torque is equal to or smaller than the clutch transmission torque, the rotational difference in the clutch 7 becomes small to thereby decrease the damage risk and thus, the continuous travel allowable period is set as a larger value (i.e., is updated to be longer one).

Additionally, in a case of the failure during a high-speed travel, the vehicle speed exceeds the predetermined vehicle speed to thereby render the engine torque relatively-large and thus, it is supposed that the rotational difference in the clutch 7 may become large to thereby increase the damage risk. For this reason, in this case, the continuous travel allowable period is set as a smaller value (i.e., is updated to be shorter one).

Contrary to said case, in a case of the vehicle speed of the predetermined vehicle speed or lower (e.g., at the failure during a low-speed travel), the engine torque may be rendered relatively-small to thereby render the rotational difference in the clutch 7 small to decrease the damage risk and thus, the continuous travel allowable period is set as a larger value (i.e., is updated to be longer one).

Thus, even without the comparison between the engine torque and the clutch transmission torque, a potential damage risk of the clutch 7 can be evaluated based on only such an estimation of the engine torque based on the vehicle speed.

Note that even in a case where the failure occurs during the high-speed travel, evasive travel is allowed without the limitation of the idle torque until the continuous travel allowable period updated as shorter one elapses. After this period elapses, the limitation is performed (i.e., the engine torque is limited to the idle torque), during which the established shift stage (one of shift stages which is established upon elapse of the period, e.g., fifth shift stage of high-speed one) is maintained (i.e., a shift gear for the established shift stage is maintained). In this case, there is a high possibility that the vehicle 1 travels, using the shift gear for high-speed shift stage, with the engine 2 rotating at the idling rotation speed to thereby cause an engine stall due to torque shortage.

When updating the continuous travel allowable period as mentioned above in a case where the actuator 70 malfunctions, the ECM 12 may acquire, from the TCM 12, the clutch transmission torque at the failure of the actuator 70 to thereby compare between the engine torque and the acquired clutch transmission torque.

On the other hand, in a case where the TCM 12 malfunctions, the ECM 12 cannot acquire, from the TCM 12, the clutch transmission torque at the failure to thereby disenable the comparing between the engine torque and the clutch transmission torque. For this reason, in this case, the ECM 10 preferably updates the continuous travel allowable period using the damage risk based on the estimated engine torque depending on the vehicle speed as mentioned above.

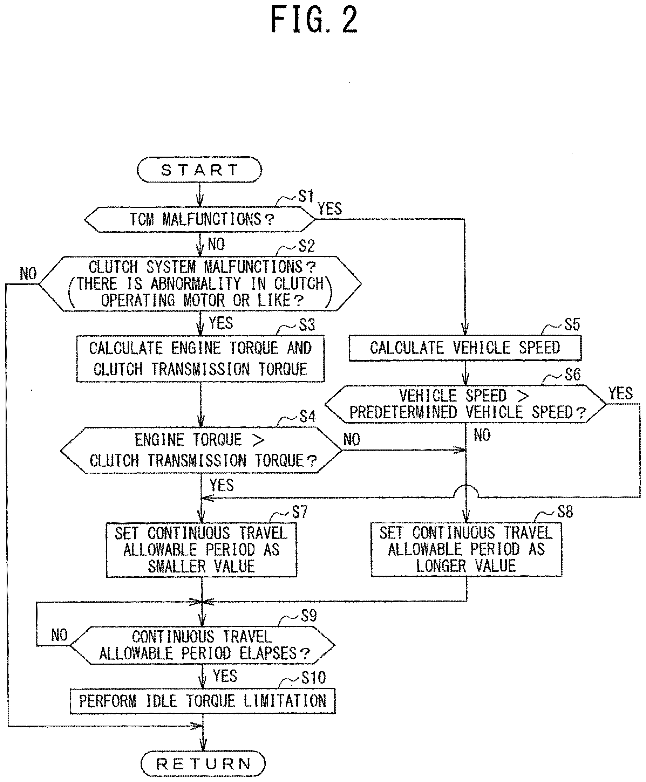

Next, referring to FIG. 2, a fail-safe operation for the clutch 7 to be performed by the ECM 10 will be explained. The process shown in FIG. 2 is repeated at a predetermined interval during activation of the vehicle 1.

As shown in FIG. 2, the ECM 12 determines whether the TCM 12 malfunctions (step S1). At step S1, in a case of communication disruption with the TCM 12, the ECM 10 determines that the TCM 12 malfunctions (YES at step S1), for example.

Otherwise (if "NO" at step S 1), the ECM 12 determines whether a clutch system malfunctions (step S2). At step S2, in a case of detecting an abnormality in the clutch switching motor (motor for operating the clutch 7) of the actuator 70, the ECM 10 determines that the clutch system malfunctions, for example.

If "NO" at step S2, the ECM 10 terminates this process to repeat it. In contrast, if "YES" at step S2, the ECM 10 calculates the engine torque and the clutch transmission torque (step S3).

Subsequently, the ECM 10 determines whether the calculated engine torque is larger than the calculated clutch transmission torque (step S4).

On the other hand, if "YES" at step S1 (when determining that the TCM 12 malfunctions), the ECM 10 calculates the vehicle speed (step S5).

Subsequently, the ECM 10 determines whether the calculated vehicle speed exceeds the predetermined vehicle speed (step S6).

If "YES" at step S4 (when determining that the calculated engine torque is larger than the calculated clutch transmission torque), or if "YES" at step S6 (when determining that the calculated vehicle speed exceeds the predetermined vehicle speed), the ECM 10 sets the continuous travel allowable period as smaller value (i.e., updates the stored continuous travel allowable period into shorter one) (step S7).

If "NO" at step S4 (when determining that the calculated engine torque is the calculated clutch transmission torque or smaller), or if "NO" at step S6 (when determining that the calculated vehicle speed is the predetermined vehicle speed or lower), the ECM 10 sets the continuous travel allowable period as larger value (i.e., updates the stored continuous travel allowable period into longer one) (step S8).

After step S7 or step S8, the ECM 10 repeatedly determines whether the set continuous travel allowable period elapses (step S9). That is, at step S9, as a timer, the elapsed time is counted until the set continuous travel allowable period elapses.

If "YES" at step S9 (i.e., upon elapse of the set continuous travel allowable period), the ECM 10 performs the idle torque limitation (step S10) and thereafter terminates this process.

The idle torque limitation to be performed at step S 10 is a process of limiting, in order to reduce a load to act on the clutch 7, the engine rotation speed to the idling rotation speed or near to limit the engine torque to the idle torque. That is, at step S 10, the ECM 10 performs switching to the limited-traveling state.

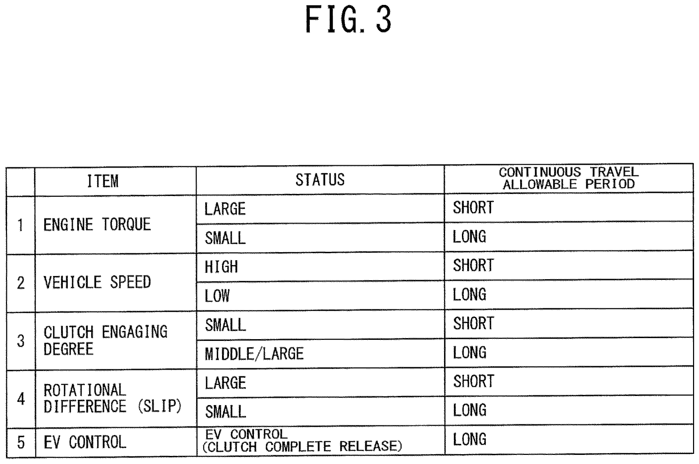

Next, referring to FIG. 3, a method to set the continuous travel allowable period will be explained more specifically.

A table for setting the continuous travel allowable period shown in FIG. 3 indicates, as to items of the engine torque, the vehicle speed, a clutch engaging degree of the clutch 7, a rotational difference of the clutch 7, and the like, respective relationships between the state thereof and the continuous travel allowable period.

As shown in FIG. 3, in a case of large engine torque, it is assumed that slip of the clutch 7 easily occurs to thereby quickly cause the seizure of the clutch 7 due to generated heat therein and thus, a relatively-short continuous travel allowable period is set. In contrast, in a case of small engine torque, a relatively-long continuous travel allowable period is set. The magnitude of the engine torque can be estimated from a throttle opening, a depression amount of the accelerator pedal, and/or the engine rotation speed. Note that the continuous travel allowable period may be set using the engine torque upon occurrence of the failure, or using an integrated value of the throttle opening or the like.

Similarly, in a case of high/low vehicle-speed, the short/long continuous travel allowable period is set.

Additionally, in a case of small clutch engaging degree, the short continuous travel allowable period is set and on the other hand, in a case of middle/large clutch engaging degree, the long continuous travel allowable period is set.

Moreover, in a case of large/small rotational difference, the short/long continuous travel allowable period is set. Note that "rotational difference" means difference between a rotation speed of the crankshaft 2A and that of an input shaft 4A of the transmission 4, i.e., a relative rotation speed in the clutch 7 between the input and output shafts.

Note that, at the failure of the actuator 70 (TCM 12 is normal), each of the clutch engaging degree and the rotational difference can be calculated using the above-mentioned relationship between the engine torque and the clutch transmission torque, for example.

By the way, during EV control by which the vehicle is allowed to travel in the EV mode, the clutch 7 is completely released to avoid the engine 2 from rotating together with the motor generator 3, maintaining the released state even at the failure of the clutch system. Thus, in this case, the long continuous travel allowable period is set, and the idle torque limitation is performed when the engine 2 is required to drive the vehicle 1 after the continuous travel allowable period elapses, alerting a need for a repair of the driver. Note that during EV control, the idle torque limitation may not be performed since there is no damage risk in the clutch 7.

The method to set the continuous travel allowable period is not limited to this, but may be for setting longer/shorter continuous travel allowable period. Specifically, the long/short continuous travel allowable period may not be constant, but may be relatively long/short in accordance with the state in the respective items (i.e., continuous travel allowable periods in the respective items may vary with the items).

Additionally, another method of multiply setting the continuous travel allowable period, referring to states in two or more of the items such as the engine torque, the vehicle speed, the clutch engaging degree, and the rotational difference, may be used.

As mentioned above, the control device according to the present embodiment includes the ECM 10 to: set, when the actuator 70 or the TCM 12 malfunctions, the continuous travel allowable period, for which the vehicle 1 is allowed to continuously travel without damage of the clutch 7, based on the damage risk of the clutch 7; and places the vehicle 1 in the predetermined limited-traveling state where a load to act on the clutch 7 is small, upon elapse of the continuous travel allowable period.

Due thereto, even in a case where the clutch 7 is disenabled to switch the clutch state (change the clutch engaging degree) due to the failure of the actuator 70 or the TCM 12, the vehicle 1 is not placed in the limited-traveling state immediately, but is allowed to travel in accordance with the driver's operation until the continuous travel allowable period elapses. Thus, it is possible to drive the vehicle 1 to the repair base and the like with the driver's intention reflected.

In this case, the ECM 10 may notify the fact of the failure of the driver to thereby cause driver's driving operation to reduce the damage risk of the clutch 7, allowing the continuous travel allowable period to be longer to thereby lengthen a period of time (glace period) for which the vehicle 1 is not transited to the limited-traveling state.

After the continuous travel allowable period elapses, the vehicle 1 is transited to the limited-traveling state, preventing the clutch 7 from being damaged.

Thus, even in a case where a failure to cause the clutch 7 to be damaged occurs, it is possible to properly set a period of time for which the vehicle 1 is allowed to travel with the driver's intention reflected while avoiding the damage of the clutch 7.

In the limited-traveling state, the engine rotation speed is limited to the idling rotation speed or near.

Due thereto, while the vehicle 1 is placed in the limited-traveling state, an idle torque when the engine 2 rotates at the idling rotation speed, which is relatively small, is to act on the clutch 7, certainly reducing a load to be applied to the clutch 7 to thereby prevent the clutch 7 from being damaged.

Especially, in a case of the failure of the TCM 12, the ECM 10 preferably sets the continuous travel allowable period based on the damage risk depending on the vehicle speed.

Thereby, even if the failure occurs in the TCM 12, during which the clutch state is disenabled to be acquired, the engine torque and/or the state of the transmission 4 is estimated based on the vehicle speed, to thereby properly set the continuous travel allowable period. Also in this case, the occurrence of the failure may be notified of the driver to allow the notified driver to perform driving operation to decrease the vehicle speed, to thereby lengthen the continuous travel allowable period.

In contrast, in a case of the failure of the actuator 70, the ECM 10 preferably sets the continuous travel allowable period based on the damage risk depending on the relationship between the engine torque and the clutch transmission torque.

Specifically, at the failure, the ECM 10 sets the continuous travel allowable period based on the magnitude relationship therebetween. Also in this case, the occurrence of the failure may be notified of the driver to allow the notified driver to perform driving operation to decrease the engine torque, to thereby lengthen the continuous travel allowable period.

Although the embodiment of the present invention is disclosed above, it is obvious that those skilled in the art can modify it without departing from the scope of the present invention, as defined by the appended claims.

### [Reference Signs List]

1: vehicle
2: engine
4: transmission
7: clutch
10: ECM (traveling state control unit)
12: TCM (clutch control unit)
70: actuator

## Claims

1. A control device of a vehicle (1),
the vehicle (1) including:
an engine (2);
a transmission (4) to change a rotation speed of the engine (2) at a shift ratio corresponding to one of shift stages and output the changed rotation speed to a driving wheel (6);
a clutch (7) to be switched between an engaged state where power is transmitted between the engine (2) and the transmission (4), and a released state where no power is transmitted therebetween;
an actuator (70) to operate the clutch (7); and
a clutch control unit (12) to control the actuator (70),
the control device comprising:
a traveling state control unit (10) configured to:
set, when the actuator (70) or the clutch control unit (12) malfunctions, a continuous travel allowable period of time, for which the vehicle (1) is allowed to continuously travel without causing a damage of the clutch (7), based on a damage risk of the clutch (7); and the control device being **characterized in that** the traveling state control unit (10) is further configured to:
place the vehicle (1) in a predetermined limited-traveling state where a load to act on the clutch (7) is limited, after the set continuous travel allowable period elapses.

2. The control device as claimed in claim 1, wherein
in the limited-traveling state, the rotation speed of the engine (2) is substantially limited to an idling rotation speed.

3. The control device as claimed in claim 1 or 2, wherein
if the clutch control unit (12) malfunctions, the traveling state control unit (10) sets the continuous travel allowable period using a vehicle speed.

4. The control device as claimed in claim 1 or 2, wherein
if the actuator (70) malfunctions, the traveling state control unit (10) sets the continuous travel allowable period using an engine torque of the engine (2).

## Patentansprüche

1. Steuervorrichtung eines Fahrzeugs (1),
wobei das Fahrzeug (1) umfasst:
einen Motor (2);
ein Getriebe (4), um eine Rotationsgeschwindigkeit des Motors (2) bei einem Übersetzungsverhältnis entsprechend einer von Gangstufen zu ändern und die geänderte Rotationsgeschwindigkeit zu einem Antriebsrad (6) auszugeben;
eine Kupplung (7), welche zwischen einem geschlossenen Zustand, in welchem Leistung zwischen dem Motor (2) und dem Getriebe (4) übertragen wird, und einem geöffneten Zustand umzuschalten ist, in welchem keine Leistung da dazwischen übertragen wird;
einen Aktuator (70) zum Betätigen der Kupplung (7); und
eine Kupplung-Steuereinheit (12) zum Steuern des Aktuators (70),
wobei die Steuervorrichtung umfasst:
eine Fortbewegungszustand-Steuereinheit (10), welche dazu eingerichtet ist:
wenn der Aktuator (70) oder die Kupplung-Steuereinheit (12) eine Fehlfunktion aufweist, eine erlaubbare Zeitperiode für eine kontinuierliche Fortbewegung zu setzen, für welche es dem Fahrzeug (1) erlaubt ist, sich kontinuierlich fortzubewegen, ohne dass eine Beschädigung der Kupplung (7) hervorgerufen wird, auf Grundlage eines Beschädigungsrisikos der Kupplung (7); und wobei die Steuervorrichtung **dadurch gekennzeichnet ist, dass** die Fortbewegungszustand-Steuereinheit (10) ferner dazu eingerichtet ist:
das Fahrzeug (1) in einen vorbestimmten Zustand mit begrenzter Fortbewegung zu versetzen, in welchem eine auf die Kupplung (7) wirkende Last begrenzt wird, nachdem die gesetzt erlaubbare Periode für eine kontinuierliche Fortbewegung verstreicht.

2. Steuervorrichtung nach Anspruch 1, wobei
in dem Zustand mit begrenzter Fortbewegung die Rotationsgeschwindigkeit des Motors (2) im Wesentlichen auf eine Leerlauf-Rotationsgeschwindigkeit begrenzt ist.

3. Steuervorrichtung nach Anspruch 1 oder 2, wobei
wenn die Kupplung-Steuereinheit (12) eine Fehlfunktion aufweist, die Fortbewegungszustand-Steuereinheit (10) die erlaubbare Periode für eine kontinuierliche Fortbewegung unter Verwendung einer Fahrzeuggeschwindigkeit setzt.

4. Steuervorrichtung nach Anspruch 1 oder 2, wobei
wenn der Aktuator (70) eine Fehlfunktion aufweist, die Fortbewegungszustand-Steuereinheit (10) die erlaubbare Periode für eine kontinuierliche Fortbewegung unter Verwendung eines Motordrehmoments des Motors (2) setzt.

## Revendications

1. Dispositif de commande d'un véhicule (1),
le véhicule (1) comportant :
un moteur (2) ;
une transmission (4) pour changer une vitesse de rotation du moteur (2) à un rapport de passage correspondant à un des étages de passage et délivrer la vitesse de rotation changée à une roue motrice (6) ;
un embrayage (7) destiné à être commuté entre un état en prise où la puissance est transmise entre le moteur (2) et la transmission (4), et un état libéré où aucune puissance n'est transmise entre ceux-ci ;
un actionneur (70) pour faire fonctionner l'embrayage (7) ; et
une unité de commande d'embrayage (12) pour commander l'actionneur (70), le dispositif de commande comprenant :
une unité de commande d'état de déplacement (10) configurée pour :
régler, lorsque l'actionneur (70) ou l'unité de commande d'embrayage (12) fonctionne mal, une période de temps admissible de déplacement continu, pendant laquelle le véhicule (1) est autorisé à se déplacer de manière continue sans provoquer un endommagement de l'embrayage (7), sur la base d'un risque d'endommagement de l'embrayage (7) ; et le dispositif de commande étant **caractérisé en ce que** l'unité de commande d'état de déplacement (10) est en outre configurée pour :
placer le véhicule (1) dans un état de déplacement limité prédéterminé où une charge pour agir sur l'embrayage (7) est limitée, après que la période admissible de déplacement continu réglée s'est écoulée.

2. Dispositif de commande selon la revendication 1, dans lequel dans l'état de déplacement limité, la vitesse de rotation du moteur (2) est sensiblement limitée à une vitesse de rotation à vide.

3. Dispositif de commande selon la revendication 1 ou 2, dans lequel si l'unité de commande d'embrayage (12) fonctionne mal, l'unité de commande d'état de déplacement (10) règle la période admissible de déplacement continu au moyen d'une vitesse de véhicule.

4. Dispositif de commande selon la revendication 1 ou 2, dans lequel si l'actionneur (70) fonctionne mal, l'unité de commande d'état de déplacement (10) règle la période admissible de déplacement continu au moyen d'un couple moteur du moteur (2).
